# FASCICULE DE BREVET EUROPEEN

(11) **EP 1 777 393 B1**
(45) Date de publication et mention de la délivrance du brevet: **10.09.2008**
(21) Numéro de dépôt: 06122696.5
(22) Date de dépôt: 20.10.2006
(51) Int. Cl.: F02C 7/36

(54) **Dispositif de prélèvement de puissance mécanique entre les arbres hp et bp d'un turbomoteur à double corps**
Vorrichtung zur mechanischen Leistungsentnahme von Hochdruck- und Niederdruckwelle eines Zweiwellentriebwerks
Device for mechanical power extraction from HP- and LP-shaft of a two-spool engine

(30) Priorité: 21.10.2005 FR 0553212
(43) Date de publication de la demande: 25.04.2007
(73) Titulaire: HISPANO SUIZA, 92700 Colombes (FR)
(72) Inventeur: Linet, Hugues Henri Raymond, 92600 Asnieres Sur Seine (FR); Mouchnino, Cyril Franck, 75015 Paris (FR); Pettinotti, Serge Dominique, 92400 Courbevoie (FR)
(74) Mandataire: David, Daniel

(56) Documents cités:
- FR-A- 2 863 312
- US-A- 3 626 692
- US-A- 4 776 163

## Description

La présente invention concerne le domaine des turbomoteurs à turbine à gaz, multi-corps, appliqués en aéronautique, et vise un moyen de prélèvement de puissance mécanique sur les arbres de rotor. Ce moyen a pour objet notamment l'entraînement des machines auxiliaires.

Un turbomoteur comprend, de façon générale, un groupe de compression d'air alimentant au moins en partie une chambre de combustion. Les gaz issus de cette dernière entraînent un ou plusieurs étages de turbine reliés mécaniquement aux compresseurs et fournissent au moins une partie de la poussée. Un moteur à double corps comprend deux ensembles de rotors, à arbres concentriques et tournant librement mécaniquement l'un par rapport à l'autre. On distingue le corps basse pression, dit BP, et le corps haute pression, dit HP. Les turboréacteurs ou turbopropulseurs civils comprennent un rotor de soufflante ou d'hélice entraîné par le corps BP et délivrant une grande part de la poussée du moteur.

Une partie de la puissance fournie par le moteur est utilisée pour alimenter les servitudes à la fois du moteur lui-même et de l'avion dont il assure la propulsion.

Cette puissance est actuellement prélevée, en partie mécaniquement, sur l'arbre de l'étage HP du moteur pour entraîner un arbre récepteur de puissance d'un boîtier d'accessoires. Ce boîtier est aussi désigné AGB, pour Accessory Gear Box. Dans un turboréacteur à soufflante avant, ce boîtier est disposé sur le carter de celle-ci. Son arbre récepteur est généralement entraîné par un arbre de transmission logé dans un des bras structuraux du carter, et relié à travers un boîtier de renvoi d'angle à un pignon de prise de mouvement solidaire de l'arbre HP. Différentes machines auxiliaires, telles que des générateurs et des pompes hydrauliques à huile ou à carburant, sont installées et entraînées sur ce boîtier à engrenages. Une autre partie du prélèvement est constituée par de l'air sous pression, soutiré au compresseur HP, pour assurer notamment la pressurisation et le conditionnement de la cabine de l'avion ou bien le dégivrage.

La tendance actuelle vise à augmenter la part du prélèvement de puissance mécanique en raison de la part croissante des moyens électriques, réputés plus souples d'emploi. Cette demande croissante de fourniture électrique pour les équipements de l'avion ne permet plus pour des raisons de fonctionnement et de performance du moteur, principalement à des régimes de rotation faible, de prélever la puissance uniquement sur le corps HP.

Cette augmentation de prélèvement de puissance pour les nouvelles applications de turbomoteurs nécessite donc la mise en oeuvre d'un système de prélèvement de puissance mécanique sur les corps HP et BP. L'invention a donc pour objet un moyen de prélèvement de puissance sur les deux rotors.

Cependant les corps HP et BP tournent, de manière indépendante, à des vitesses différentes et possèdent des plages de fonctionnement différentes. Entre le régime de ralenti et le régime de plein gaz, le rapport des vitesses pour l'arbre HP est de l'ordre de deux ; la vitesse de rotation passe par exemple de 10.000 tours par minute à 20.000 tours par minute. En revanche, le rapport des vitesses pour l'arbre BP est de l'ordre de cinq ; sa vitesse passe par exemple de 900 tours par minute au ralenti à 4500 tours par minute au régime plein gaz. Il se pose alors le problème d'assurer un prélèvement compatible avec ces deux plages de fonctionnement distinctes. Ce problème est d'autant important à résoudre que les accessoires installés sur le boîtier sont adaptés pour fonctionner à l'intérieur de plages de vitesses compatibles avec celle du corps HP. On a vu qu'elle était nettement inférieure à celle du corps BP.

La présente invention a ainsi pour objet également un moyen de prélèvement de puissance mécanique qui soit adapté à la plage de fonctionnement des accessoires montés sur le boîtier AGB.

On parvient à réaliser ces objectifs, conformément à l'invention, avec un dispositif d'entraînement de machines auxiliaires d'un turbomoteur multi-corps, notamment à double corps, avec un arbre BP et un arbre HP, les dites machines étant installées sur un boîtier d'accessoires comportant un arbre d'entraînement commun, caractérisé par le fait qu'il comprend un engrenage différentiel avec un premier et un deuxième arbres d'entrée et un arbre de sortie,
le premier arbre étant relié par un accouplement sélectif soit à l'arbre BP soit à l'arbre HP,
le deuxième arbre d'entrée étant relié à l'arbre HP, et
l'arbre de sortie étant relié à l'arbre d'entraînement dudit boîtier d'accessoires.

Plus particulièrement, le premier arbre est relié par l'accouplement sélectif à l'arbre BP quand le régime du moteur est inférieur à une valeur déterminée, et à l'arbre HP quand le régime est supérieur à ladite valeur.

De préférence l'accouplement sélectif est de type à crabot.

La solution de l'invention permet ainsi un prélèvement de puissance mécanique sur le corps BP suffisant pour préserver les performances du moteur et maintenir la rotation de l'arbre d'entraînement du boîtier d'accessoires dans une plage de vitesses compatible avec les machines qui y sont installées.

On connaît les brevets FR 2 863 312 A FR 2.520.806 et FR 2.606.077 A qui portent chacun sur un moteur à deux arbres et une prise de mouvement dans lequel cette dernière comporte un mécanisme différentiel relié à chacun des deux arbres et pourvu d'un arbre de sortie tournant à une vitesse fonction de la différence des vitesses des deux arbres. La plage de variation de la différence des vitesses étant plus faible que celle des arbres, on réduit le besoin d'adaptation des machines. Cependant on ne peut l'éliminer entièrement.

On décrit plus en détail un mode de réalisation non limitatif de l'invention, ci-après représenté sur les dessins annexés, et sur lesquels
La figure 1 est une représentation schématique d'un prélèvement de puissance mécanique selon l'invention dans une configuration de multiprélèvement.
La figure 2 est une représentation du prélèvement de puissance mécanique dans une configuration de prélèvement HP seul.
La figure 3 est un graphique illustrant l'évolution des vitesses de rotation de chacun des arbres, en fonction du régime moteur et montrant l'intérêt de l'invention.

Le turbomoteur n'est pas représenté, dans la mesure où l'invention ne porte pas sur lui. Il peut être quelconque. Il s'agit cependant nécessairement d'un turbomoteur multi-corps, notamment à double corps, tel que rapporté plus haut. Les arbres 1 et 3, BP et HP, sont concentriques, libres mécaniquement de tourner l'un par rapport à l'autre. Ils sont soit co-rotatifs, soit contrarotatifs. L'arbre BP est monté par des paliers appropriés à l'intérieur de l'arbre HP. Dans le cas d'un turboréacteur à double flux, il entraîne une soufflante, par exemple disposée sur l'avant.

Chacun des deux arbres est pourvu d'un moyen de prise de mouvement de rotation représentés ici par deux pignons coniques, 1a et 3a respectivement.

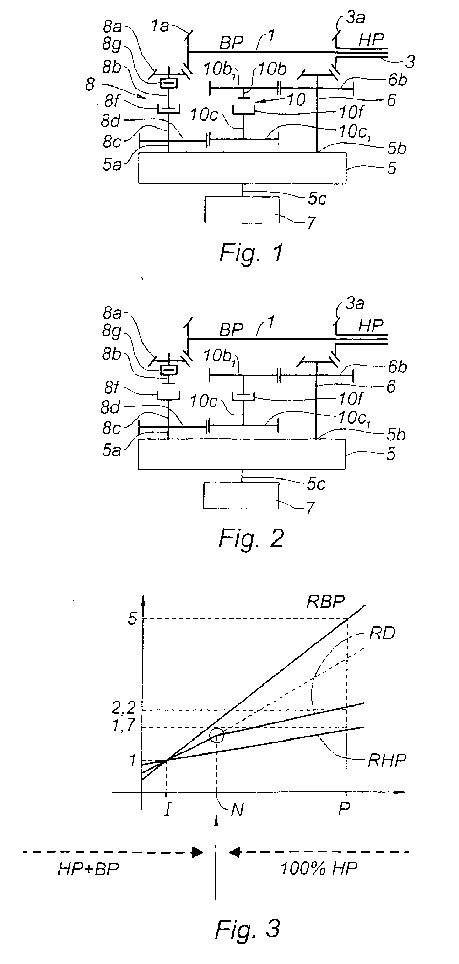

Un engrenage différentiel à train épicycloïdal 5 comporte un premier 5a et un deuxième 5b arbres d'entrée, ainsi qu'une sortie de puissance 5c reliée à l'arbre d'entraînement commun d'un boîtier d'accessoires 7. Sur la figure 1 cet arbre est confondu avec l'arbre de sortie de puissance 5c de l'engrenage différentiel.

La transmission cinématique 8 entre la prise de mouvement 1a et l'entrée du différentiel 5 est constituée ici d'un pignon conique 8a en prise avec le pignon 1a et d'une ligne de transmission de mouvement 8b-8c. Cette ligne de transmission de mouvement comporte un moyen d'accouplement débrayable 8f, tel qu'un crabot, entre deux éléments, l'un 8b relié au pignon 8a et l'autre 8c relié à l'entrée 5a du différentiel 5.

Une roue libre 8g est interposée en amont du crabot 8f, c'est-à-dire entre le pignon 8a et l'élément 8b de la transmission par exemple. Cette roue libre 8f est agencée de manière à être engagée lorsque le boîtier d'accessoires 7 fonctionne en récepteur, c'est-à-dire quand le moteur est en fonctionnement. La roue libre est désengagée, c'est-à-dire qu'elle ne transmet aucun mouvement de rotation entre l'élément 8b et le pignon 8a quand le boîtier 7 est moteur, c'est-à-dire au démarrage quand le démarreur est actionné pour en traîner le rotor HP. La description du fonctionnement au démarrage est présentée plus loin.

La transmission 6 entre le pignon 3a et l'entrée 5b du différentiel est directe, sans accouplement débrayable.

Un accouplement débrayable 10f est prévu entre les deux transmissions 6 et 8. Il est monté sur un arbre 10 en deux parties 10b et 10c de part et d'autre de l'accouplement : la partie 10b est reliée par engrenage 10b1-6b à l'arbre 6 et la partie 10c est reliée par engrenage 10c1-8d, à la partie 8c de l'arbre 8. L'accouplement est par exemple à crabot.

Les deux accouplements 8f et 10f, formant un accouplement sélectif, sont commandés par un organe de commande approprié.

Dans la configuration de la figure 1, l'accouplement par crabot 8f est en prise. Les parties 8b et 8c sont solidaires entre elles ; les deux parties 10b et 10c sont désolidarisées l'une de l'autre. L'arbre BP entraîne l'arbre d'entrée 5a du boîtier 5 et l'arbre HP entraîne l'arbre d'entrée 5b du boîtier 5.

La figure 2 montre la même transmission que dans la figure 1, mais c'est l'accouplement 10f qui est en prise. Les parties 10b et 10c sont solidaires entre elles. Les parties 8b et 8c sont désolidarisées l'une de l'autre. Dans cette configuration, les deux entrées 5a et 5b, du différentiel 5 sont en prise avec l'arbre HP et entraînées par lui. Ce dernier assume seul la charge d'entraîner les machines auxiliaires montées sur le boîtier.

On décrit le fonctionnement du dispositif en relation avec la figure 3.

Cette figure montre dans un repère avec en abscisse le régime du moteur ou son niveau de puissance. I marque le régime de ralenti, et P le régime plein gaz, de décollage par exemple. En ordonnée est rapportée la vitesse de rotation exprimée en rapport sur la vitesse de ralenti.

La courbe Rhp s'étend de I à P d'une valeur 1, correspondant à la vitesse de ralenti, jusqu'à une valeur, ici de 1,7. La plage de vitesses de fonctionnement du rotor HP de ce moteur est de 1 à 1,7 entre le ralenti est les pleins gaz. La courbe Rbp représente de la même façon la plage des vitesses de fonctionnement du rotor basse pression BP. La plage de vitesses du rotor BP est bien plus étendue que celle du rotor HP puisqu'elle passe de 1 à 5.

La droite Rd montre la plage des vitesses de fonctionnement de l'arbre 5c.

Entre le ralenti et un régime du moteur N pré-établi, l'accouplement 8f est en prise 10f est désaccouplé. La configuration est en multiprélèvement. L'arbre BP participe à l'entraînement des auxiliaires et cela est souhaitable car le régime du rotor HP n'est pas optimal pour effectuer un prélèvement de puissance.

L'organe de commande des accouplements 8f et 10f est déterminé pour basculer l'accouplement entre les parties des arbres 8 et 10, de 8f à 10f. Dans cette configuration, les deux entrées 5a et 5b sont entraînées par le même arbre, HP. La courbe d'évolution de la vitesse de la sortie du différentiel 5c est parallèle à la courbe Rhp. Dans cet exemple, la vitesse de l'arbre d'entrée du boîtier évolue donc dans une plage limitée, de 1 à 2,2. La plage des vitesses étant pilotée uniquement par le corps HP, on respecte les exigences des machines installées sur le boîtier.

On comprend que si l'accouplement sélectif restait positionné sur le crabotage de 8f, la vitesse évoluerait comme la courbe en pointillé à partir du régime N. Le rapport des vitesses serait alors à peine inférieur à celui de Rbp.

La seconde configuration correspondant à celle de la figure 2, est utilisée pour les régimes de rotation du moteur autorisant le prélèvement de puissance sur l'arbre HP seul.

Pour le démarrage du moteur, un démarreur, non représenté, est branché sur le boîtier d'engrenage 7. La configuration, non représentée, diffère de celles représentée sur les figures 1 et 2. Dans ce cas l'accouplement sélectif est disposé de manière que les deux crabots 8f et 10f soient en prise en même temps ; les deux lignes de transmission 8b-8c d'une part et 10b-10c d'autre part sont accouplées. En raison de la transmission de puissance depuis le boîtier 7 vers le pignon 8a la roue libre 8g est désengagée. Comme dans la configuration de la figure 2, la puissance motrice du démarreur est transmise intégralement au rotor HP. En fin de démarrage, la commande libère le crabot 10f pour désaccoupler les arbres 10b et 10c l'un de l'autre. On en vient à la configuration 1. Après démarrage le boîtier 7 devenant récepteur, la roue libre est alors automatiquement engagée et on se trouve au ralenti dans la configuration de la figure 1.

La roue libre 8g permet ainsi d'éviter au démarrage d'avoir à accélérer jusqu'au point de vitesse N préétabli pour le changement de configuration. Cette vitesse pouvant être trop élevée, et créant une poussée au sol excessive.

## Revendications

1. Dispositif d'entraînement de machines auxiliaires d'un turbomoteur à double corps avec un arbre BP et un arbre HP, les dites machines étant installées sur un boîtier d'accessoires (7) comportant un arbre d'entraînement commun, **caractérisé par le fait qu'**il comprend un engrenage différentiel (5) avec un premier (5a) et un deuxième (5b) arbres d'entrée et un arbre de sortie (5c),
a. le premier arbre d'entrée (5a) étant relié par un accouplement sélectif (8f-10f) soit à l'arbre BP soit à l'arbre HP,
b. le deuxième arbre d'entrée (5b) étant relié à l'arbre HP, et
c. l'arbre de sortie (5c) étant relié à l'arbre d'entraînement du boîtier (7).

2. Dispositif selon la revendication 1 dont le premier arbre (5a) est relié par l'accouplement sélectif (8f-10f)) à l'arbre BP quand le régime du moteur est inférieur à une valeur déterminée (N), et à l'arbre HP quand le régime est supérieur à ladite valeur.

3. Dispositif selon l'une des revendications 1 et 2 dont l'accouplement sélectif est de type à crabot.

4. Dispositif selon la revendication 3 dont l'accouplement sélectif à crabot comprend un premier crabot (8f) entre l'arbre d'entrée (5a) et l'arbre BP et un deuxième crabot (10f) entre l'arbre d'entrée (5a) et l'arbre HP

5. Dispositif selon la revendication 4 comprenant un dispositif à roue libre (8g) dans la ligne de transmission mécanique entre le premier crabot (8f) et l'arbre BP agencé de manière à être engagé quand le moteur est en fonctionnement et désengagé quand le moteur est entraîné au démarrage par l'arbre (5c) du boîtier d'accessoires.

## Claims

1. Device for driving auxiliary machines of a double-shaft turbine engine with an LP shaft and an HP shaft, the said machines being installed in an accessory gearbox (7) comprising a common drive shaft, **characterized in that** it comprises a differential gear (5) with a first input shaft (5a) and a second input shaft (5b) and an output shaft (5c),
a. the first input shaft (5a) being connected via a selective coupling (8f-10f) either to the LP shaft or to the HP shaft,
b. the second input shaft (5b) being connected to the HP shaft, and
c. the output shaft (5c) being connected to the drive shaft of the gearbox (7).

2. Device according to Claim 1, in which the first shaft (5a) is connected via the selective coupling (8f-10f) to the LP shaft when the engine speed is less than a determined value (N) and to the HP shaft when the speed is greater than the said value.

3. Device according to one of Claims 1 and 2, in which selective coupling is of the dog clutch type.

4. Device according to Claim 3, in which the dog clutch selective coupling comprises a first dog clutch (8f) between the input shaft (5a) and the LP shaft and a second dog clutch (10f) between the input shaft (5a) and the HP shaft.

5. Device according to Claim 4 comprising a free wheel device (8g) in the mechanical transmission line between the first dog clutch (8f) and the LP shaft arranged so as to be engaged when the engine is operating and disengaged when the engine is driven on start-up by the shaft (5c) of the accessory gearbox.

## Patentansprüche

1. Vorrichtung zum Antrieb von Hilfsmaschinen für ein Zweiwellen-Turbotriebwerk mit einer Niederdruckwelle und einer Hochdruckwelle, wobei diese Maschinen an einem Hilfsgeräte-Gehäuse (7) eingebaut sind, welches eine gemeinsame Antriebswelle aufweist,
**dadurch gekennzeichnet,**
**dass** sie ein Differentialgetriebe (5) mit einer ersten Antriebswelle (5a) und einer zweiten Antriebswelle (5b) und einer Abtriebswelle (5c) umfasst, wobei
a. die erste Antriebswelle (5a) durch eine Selektivkupplung (8f- 10f) entweder mit der Niederdruckwelle oder mit der Hochdruckwelle verbunden ist,
b. die zweite Antriebswelle (5b) mit der Hochdruckwelle verbunden ist, und c. die Abtriebswelle (5c) mit der Antriebswelle des Gehäuses (7) verbunden ist.

2. Vorrichtung nach Anspruch 1, bei der die erste Antriebswelle (5a) durch die Selektivkupplung (8f- 10f) mit der Niederdruckwelle verbunden ist, wenn die Drehzahl des Motors unter einem bestimmten Wert (N) liegt, und mit der Hochdruckwelle verbunden ist, wenn die Drehzahl über diesem Wert liegt.

3. Vorrichtung nach einem der Ansprüche 1 und 2, bei der die Selektivkupplung eine Klauenkupplung ist.

4. Vorrichtung nach Anspruch 3, bei der die Selektiv-Klauenkupplung eine erste Kupplungsklaue (8f) zwischen der Antriebswelle (5a) und der Niederdruckwelle und eine zweite Kupplungsklaue (10f) zwischen der Antriebswelle (5a) und der Hochdruckwelle umfasst.

5. Vorrichtung nach Anspruch 4, die eine Freilaufradeinrichtung (8g) in der mechanischen Übertragungslinie zwischen der ersten Kupplungsklaue (8f) und der Niederdruckwelle aufweist, die so ausgeführt ist, dass sie in Eingriff ist, wenn das Triebwerk in Betrieb ist, und gelöst ist, wenn das Triebwerk durch die Welle (5c) des Hilfsgeräte-Gehäuses gestartet wird.
